Europäisches Patentamt

European Patent Office

Office européen des brevets

(19)

(11) Publication number: **0 425 856 A1**

# (12) EUROPEAN PATENT APPLICATION

(21) Application number: 90119468.8

(22) Date of filing: 11.10.90

(51) Int. Cl.⁵: **G21C 3/326**

(30) Priority: 03.11.89 US 431355

(43) Date of publication of application:
**08.05.91 Bulletin 91/19**

(84) Designated Contracting States:
**BE DE ES FR GB IT SE**

(71) Applicant: **WESTINGHOUSE ELECTRIC CORPORATION**
**Westinghouse Building Gateway Center**
**Pittsburgh Pennsylvania 15222(US)**

(72) Inventor: **Nguyen, Tho Quoc**
**63 Barri Drive**
**Irwin, Pennsylvania 15642(US)**
Inventor: **Casadei, Alberto Luiz**
**2128 Berkshire Drive**
**Monroeville, Pennsylvania 15146(US)**

(74) Representative: **Fleuchaus, Leo, Dipl.-Ing. et al**
**Patentanwälte Helmut Schroeter, Klaus**
**Lehmann, Wulf Wehser, Rupprecht Holzer,**
**Wolfgang Gallo Ludwigstrasse 26**
**W-8900 Augsburg(DE)**

(54) **Fuel assembly and rod for optimal fuel utilization.**

(57) The invention relates to a nuclear fuel assembly, and to a method, for optimizing the utilization of nuclear fuel.

The nuclear fuel assembly is composed of an initial set of axial fuel modules (34) stacked end-to-end and releasably interconnected to structurally integrate them as an axially modular fuel assembly (32). After use of the latter in a reactor core, its axial fuel modules (34) are released for separation from each other and unstacked, whereupon incompletely burnt upper and lower end modules (34A, 34B) can be reclaimed for subsequent use, together with fresh fuel modules substituted for spent ones of the initial set, in a reconstituted axially modular fuel assembly.

FIG. 4

FIG. 5

FIG. 3

## FUEL ASSEMBLY AND ROD FOR OPTIMAL FUEL UTILIZATION

The present invention relates generally to nuclear fuel assemblies and, more particularly, to a modular fuel assembly and fuel rod design permitting a more optimal fuel utilization.

A typical conventional nuclear fuel assembly comprises basically a structural skeleton, and a plurality of fuel rods supported therein. The skeleton is composed of upper and lower end structures commonly referred to as top and bottom nozzles, elongate structural components usually in the form of control-rod guide thimbles extending longitudinally between the top and bottom nozzles and connected thereto, and transverse grids axially spaced along and connected to the structural components. The fuel rods are laterally supported by the transverse grids in predetermined parallel spaced relationship with respect to one another.

Typically, each fuel rod comprises an elongate cladding tube containing a stack of fuel pellets made of fissile material, such as uranium dioxide, and having its opposite ends sealed by means of end plugs, and it is supported at each grid location by a combination of dimples and springs formed in the respective grid as integral parts thereof. The transverse grids are attached to the guide thimbles, usually by means of bulge joints formed on the guide thimbles and holding the grids captive at their respective grid locations spaced along the guide thimbles, so as, together with the latter, to form an integrated skeletal structure into which the fuel rods can be inserted. The top nozzle attached to upper end portions of the guide thimbles serves as an upper structural component of the fuel assembly, and the bottom nozzle attached to lower end portions of the guide thimbles serves as a lower structural component of the fuel assembly adapted to support the latter and to direct reactor coolant into it. The guide thimbles, in addition to functioning as structural components, also serve to guide control rods during movement thereof.

In a nuclear reactor core utilizing such conventional fuel assemblies, the benefits of an extended core life are not fully realized due to incomplete fuel consumption occurring during core life in the outer regions of the core. One approach toward better fuel utilization, taken in Applicant's U.S. Patent No. 4,493,814 and No. 4,631,166, is to employ natural uranium or seed blankets at the top and bottom of the core. Another approach is disclosed in Applicant's U.S. Patent No. 4,716,015 which provides a radially modular fuel assembly composed of several radial subassemblies each comprising a bottom nozzle module, a top nozzle module, several axially spaced grid modules, and at least one elongate structural member, such as a control-rod guide thimble, which interconnects the top nozzle and bottom nozzle modules and supports the grid modules so as to form an axially integrated skeletal structure. The bottom nozzle module and top nozzle module of the various subassemblies include interlocking formations which enable the radial subassemblies to be separably joined together so as to complete the radially modular fuel assembly.

Whilst these earlier approaches do help to improve fuel utilization, optimal fuel utilization has yet to be achieved. It is the principal object of the invention to advance the art to this end. Broadly, the inventive concept is to provide an axially modular fuel assembly composed of axial fuel modules or subassemblies stacked and releasably intded in a manner enabling them, after use, to be disassembled at the reactor site and then reassembled as a reconstituted modular fuel assembly utilizing incompletely burnt fuel modules from the upper and lower end regions of the used fuel assembly together with fresh fuel modules substituted for the more completely burnt intermediate fuel modules thereof. Thus, after an axially modular fuel assembly embodying the invention has completed a fuel cycle in a reactor core, the incompletely burnt fuel in its upper and lower end modules, which may still have about 10 to 12 percent more reactivity than the fuel in its intermediate fuel modules, can be reclaimed for re-use, thereby allowing optimal fuel utilization to be achieved.

More particularly, the invention, from one aspect thereof, resides in a nuclear fuel assembly for use in a nuclear reactor core, especially one having an upper end region and a lower end region in each of which the average rate of axial fuel burnup during reactor operation is lower than in an intermediate core region located therebetween, characterized in that said fuel assembly comprises a plurality of axial fuel modules which include releasable interconnecting means for interfitting and releasably interlocking the fuel modules in stacked axially aligned end-to-end relationship with respect to each other, the axial fuel modules include upper and lower end modules which have axial dimensions corresponding substantially to those of said upper and lower end regions, respectively, of the nuclear core.

The axial fuel modules comprise fuel rod segments having end plugs which include interfitting elements for releasably interfitting the respective fuel rod segments end-to-end with adjacent ones axially aligned therewith. The interfitting elements for releasably interfitting any two adjacent fuel rod segments may comprise an axial recess formed in the respective end plug of one of the two adjacent fuel rod segments, and a complementarily shaped axial projection formed on the adjoining end plug of the other of said two adjacent fuel rod segments, or they may comprise an internally threaded axial bore formed in the respective end plug of one of the two adjacent fuel rod segments, and an externally threaded axial stud on the adjoining end plug of the other of said two adjacent fuel rod segments.

Preferably, each axial fuel module comprises a subassembly comprising a plurality of elongate structural components disposed in substantially parallel spaced relationship with respect to each other, and at least one transverse fuel-rod support grid connected to said elongate structural components so as to form a skeletal structure together therewith, said releasable interconnecting means including end portions of the elongate structural components which interfit and have disposed thereon mateable interlocking formations for releasably interlocking the interfit end portions of adjacent structural components with each other. The upper and lower end modules are releasably connected to the top nozzle and the bottom nozzle, respectively, of the axially modular fuel assembly. The elongate structural components are tubular guide thimble segments, and the interfit guide thimble segments of the axially stacked fuel modules form elongated segmented guide thimbles extending full-length through the stacked fuel modules. Preferably, the interlocking formations on each guide thimble segment comprise a radial protuberance defined on the outer periphery of one end portion, and an annular groove defined on the inner periphery of an opposite end portion, of the guide thimble segment, said one end portion of each guide thimble preferably having formed therein at least one longitudinal slot, and said opposite end portion thereof preferably being enlarged just sufficiently to facilitate insertion therein of said one end portion of the guide thimble segment adjacent thereto. The releasable interconnecting means associated with each elongated segmented guide thimble include an elongated tubular locking member which is removably inserted into the segmented guide thimble for positively preventing inad vertent release of the mated interlocking formations thereon.

The invention, from another aspect thereof, resides in a method of optimizing nuclear fuel utilization, characterized by the steps of (a) assembling an initial set of axial fuel modules in stacked relationship with each other such that corresponding structural components and corresponding fuel rod segments thereof are aligned end-to-end; (b) releasably interfitting the aligned fuel rod segments of the stacked axial fuel modules to form a plurality of segmented fuel rods extending therethrough; and (c) releasably interconnecting the stacked axial fuel modules so as to integrate them as an axially modular fuel assembly. The method further includes the following additional steps performed after use of said axially modular fuel assembly in a nuclear reactor core: (d) releasing the axial fuel modules for separation from each other; (e) unstacking the fuel modules; (f) substituting fresh axial fuel modules for some of the initial ones; (g) reassembling the fresh axial fuel modules together with the retained initial fuel modules in said stacked relationship, and (h) releasably reconnecting the fresh and retained fuel modules to each other so as to re-integrate them as an axially modular fuel assembly. Preferably, the fuel modules retained are upper and lower end modules from the axially modular fuel assembly initially used.

Preferred embodiments of the invention will now be described, by way of example only, with reference to the accompanying drawings, in which:

Fig. 1 is a side elevational view, with parts partially sectioned and broken away for clarity, of a conventional nuclear fuel assembly;

Fig. 2 is an exploded schematic representation of an axially modular fuel assembly embodying the invention;

Fig. 3 is a side elevational view of an upper module or subassembly of the modular fuel assembly of Fig. 2 without fuel rod segments incorporated therein;

Fig. 4 is a side elevational view of an intermediate module or subassembly of the modular fuel assembly of Fig. 2 with fuel rod segments incorporated therein;

Fig. 5 is a side elevational view of a lower module or subassembly of the modular fuel assembly of Fig. 2 without fuel rod segments incorporated therein;

Fig. 6 is an enlarged longitudinal sectional view of one embodiment of a fuel rod segment suitable for use in conjunction with the subassemblies of Figs. 3-5;

Fig. 7 is an enlarged sectional view of one of the guide thimble segments utilized in the subassemblies of Figs. 3-5;

Fig. 8 is an enlarged fragmentary longitudinal sectional view, in foreshortened form, of part of the modular fuel assembly of Fig. 2, which illustrates the releasable joints formed between the segments of a segmented guide thimble, and an inserted locking tube extending therethrough;

Fig. 9 is an enlarged fragmentary view of one of the releasable joints between two guide thimble segments;

Fig. 10 is an exploded schematic representation of another embodiment of a modular or segmented fuel rod suitable for use in conjunction with the axially modular fuel assembly of the invention;

Fig. 11 is an enlarged longitudinal sectional view of one of the segments of the fuel rod shown in Fig. 10; and

Fig. 12 is a schematic representation of a nuclear reactor core composed of axially modular fuel assemblies according to the invention.

In the following description, like reference characters designate like or corresponding parts throughout the several views, and terms such as "forward", "rearward", "left", "right", "upward", "downward", and the like are used as words of convenience not to be construed as limiting terms.

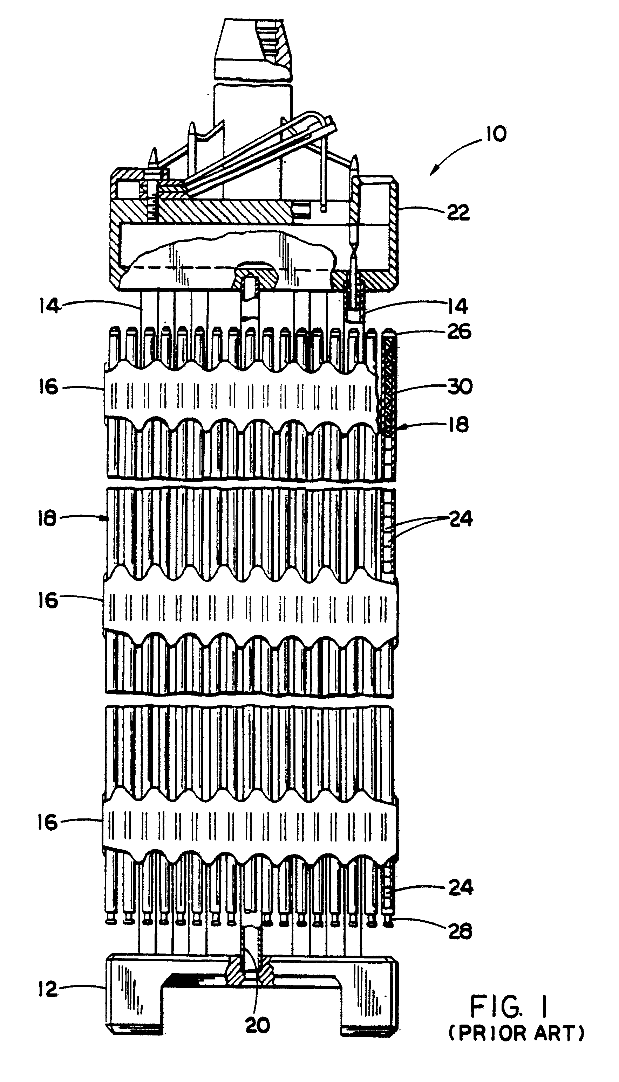

Initially referring in particular to Fig. 1 of the drawings, the conventional fuel assembly illustrated therein and generally designated with reference numeral 10 is of a type commonly used in pressurized water reactors (PWR). Basically, it comprises a lower end structure or bottom nozzle 12 adapted to support the fuel assembly on the lower core plate (not shown) of a PWR core (not shown) and to direct reactor coolant into the fuel assembly, control-rod guide thimbles 14 extending upwards from the bottom nozzle 12, transverse support grids 16 spaced apart axially along the guide thimbles 14 and attached thereto, an organized array of elongate fuel rods 18 laterally spaced apart and supported by the grids 16, a centrally located instrumentation tube 20, and an upper end structure or top nozzle 22 removably attached to upper end portions of the guide thimbles 14.

Each of the fuel rods 18 has its opposite ends hermetically sealed by means of end plugs 26, 28, and it contains a stack of fuel pellets 24 and a plenum spring 30, the latter being disposed between the upper end plug 26 and the fuel pellets 24 for the purpose of keeping the pellets firmly stacked. As well known in the art, the fuel pellets 24 made of fissile material are the source of reactive power generated in the reactor during operation thereof, and liquid moderator/coolant, such as water or water containing boron, is pumped through the fuel assemblies during reactor operation to extract heat therefrom for the production of useful work.

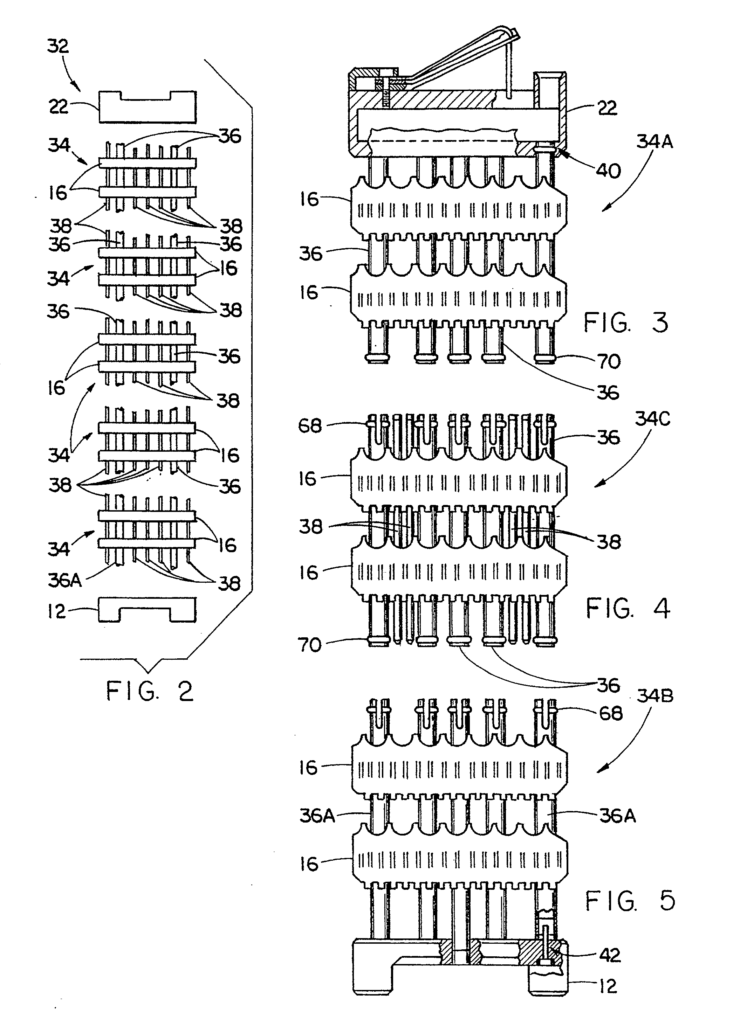

Referring now to Figs. 2 to 5, there is illustrated an axially modular fuel assembly embodying the invention and generally designated with numeral 32 (parts thereof which correspond to components found also in the conventional fuel assembly 10 bear the same reference characters as appear in Fig. 1). Basically, the axially modular fuel assembly 32 is composed of a set of axially stacked and interconnected axial modules or subassemblies 34 which, as shown in Fig. 2, comprise an upper module or subassenmly 34A including a top nozzle 22, a lower module or subassembly 34B including a bottom nozzle 12, and several, preferably at least three, intermediate modules or subassemblies 34C therebetween.

Each module or subassembly 34 comprises several elongate structural components 36, a plurality of fuel rod segments 38, and at least one, preferably two, transverse support grids 16 which may be of a suitable conventional design, the support grids 16 being attached to the elongate structural components 36 and supporting the fuel rod segments 38 in a suitable manner such as employed, for instance, in conjunction with the grids 16 of the conventional fuel assembly 10 shown in Fig. 1. The structural components 36 of the upper and lower subassemblies 34A, 34B are releasably connected in a suitable manner to the top and bottom nozzles 22, 12, respectively, and the structural components 36 of each intermediate subassembly 34C are releasably connected to the corresponding structural components 36 of the upper or lower subassembly 34A, 34B, respectively, and/or to the corresponding structural components 36 of each adjacent intermediate subassembly 36C, respectively.

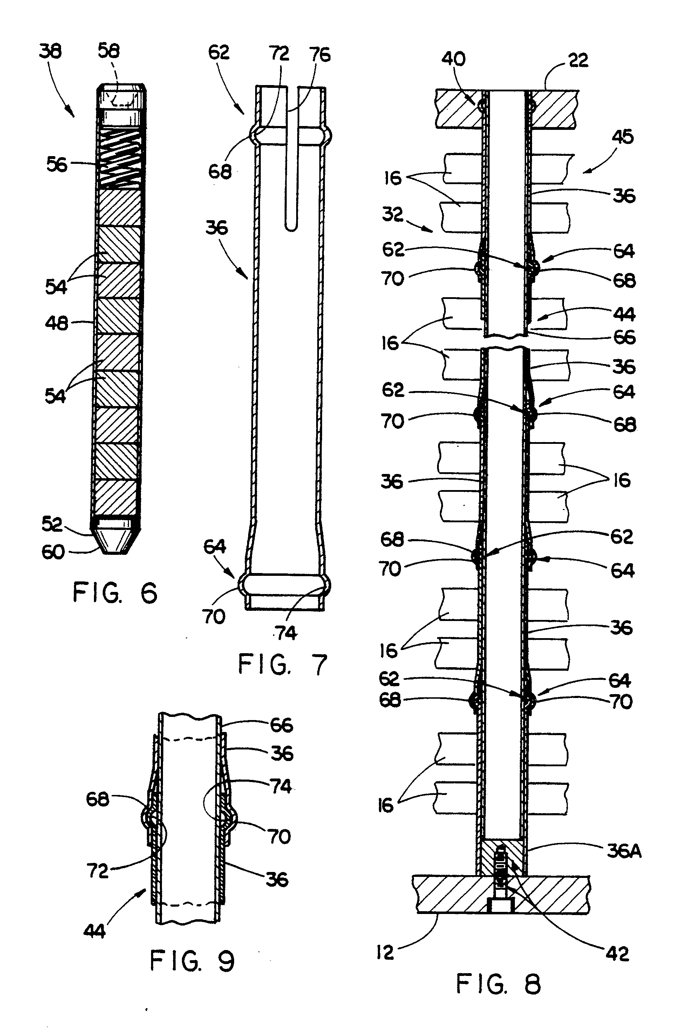

In Figs. 3-5 and 7-9, the elongate structural components 36 of the various subassemblies 34 are shown as guide thimble segments which, when releasably interconnected, form complete elongated segmented guide thimbles 44 (Fig. 8) extending full-length between, and connected to, the bottom and top nozzles 12,22 of the axially modular fuel assembly 32 so as, together therewith, to form the structural skeleton 45 of the modular fuel assembly partially depicted in Fig. 8. As seen from the latter, each guide thimble segment 36 of the uppermost subassembly 34A is connected to the top nozzle 22 in a conventional manner by means of a socket-and-groove bulge type attachment 40, and each guide thimble segment 36 of the lowermost subassembly 34B is connected to the bottom nozzle 12 likewise in a conventional manner by means of a threaded plug-and-screw type attachment 42. The support grids 16 of the various modules or subassemblies 34 joined to form the axially modular fuel assembly 32 are spaced apart axially along the segmented guide thimbles 44, and the axially aligned fuel rod segments 38 supported by the grids 16 of the various subassemblies 34 are interfit end-to-end so as to form elongated full-length, segmented or modular fuel rods supported between the bottom and top nozzles 12,22 of the complete fuel assembly 32.

In one embodiment of such modular or segmented fuel rod, each fuel rod segment 38 comprises, as shown in Fig. 6, a cladding tube segment 48 having its opposite ends sealed by means of end plugs 50, 52, a stack of fuel pellets 54 contained in the sealed cladding tube segment 48, a plenum spring 56 disposed within the latter between the stack of fuel pellets 54 and the upper end plug 50, and means in the form of first and second interfitting elements 58, 60 defined on the end plugs 50 and 52, respectively, for releasably interfitting the fuel rod segment 38 end-to-end with corresponding fuel rod segments 38 of adjacent modules 34. The first and second interfitting elements 58, 60 are shown in Fig. 6, by way of example only, to comprise respectively a generally frustoconical recess 08 axially extending into the upper end plug 50 from the upper or outer end thereof, and a complementarily shaped frustoconical projection 60 axially extending from the lower end plug 52.

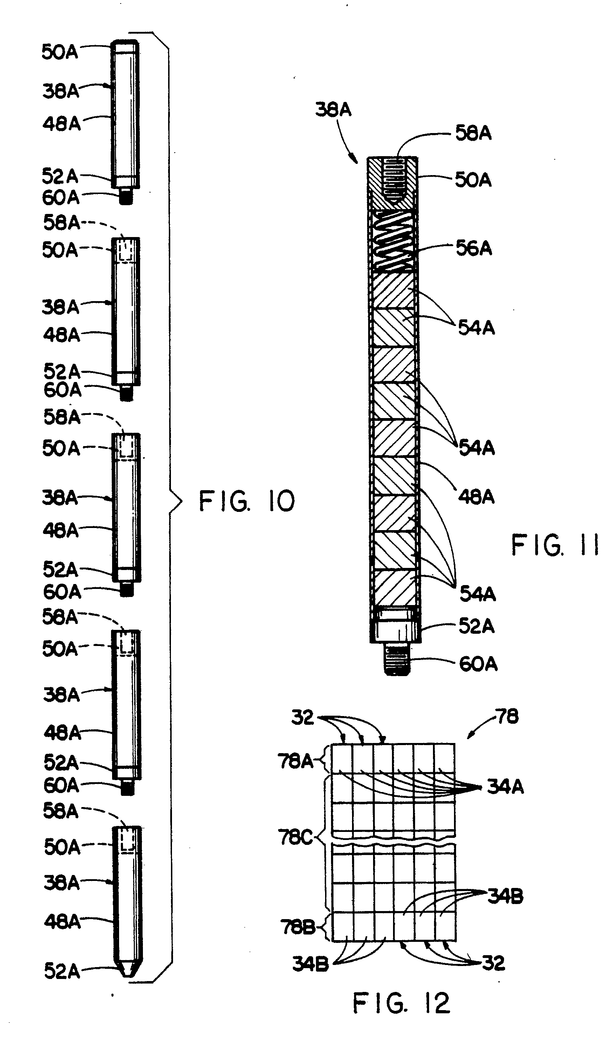

In the other embodiment of a modular fuel rod shown in Figs. 10-11, each fuel rod segment 38A likewise comprises a cladding tube segment 48A having its opposite ends sealed by means of end plugs 50A and 52A, a stack of fuel pellets 54A contained in the sealed cladding tube segment, a plenum spring 56A disposed within the latter between the stack of fuel pellets 54A and the upper end plug 50A, and interfitting elements 58A, 60A enabling the fuel rod segment 38A to be releasably interfit end-to-end with adjacent ones. However, in this embodiment, the interfitting elements have complementary male and female threads which enable the fuel rod segments 38A to be separably screwed together end-to-end. The interfitting elements of each fuel rod segment 38A shown in Figs. 10-11 are an externally threaded axial stud 60A on the lower end plug 52A, and an internally threaded or tapped axial bore 58A in the upper end plug 50A; preferably, and as seen from Fig. 10, the upper end plug 50A of each fuel rod segment 38A associated with the upper subassembly 34A has no tapped bore, and the lower end plug 52A of each fuel rod segment 38A associated with the lower subassembly 34B has no externally threaded stud but instead is conically tapered.

Referring now to Figs. 3-5 and 7-9, the axially modular fuel assembly 32 further includes means for releasably interconnecting the elongate structural components or guide thimble segments 36 of the various subassemblies 34A so that each row of axially aligned structural components or guide thimble segments 36 will form an elongated full-length, segmented structural support member or guide thimble 44 having its opposite ends connected to the top and bottom nozzles 22, 12 of the fuel assembly 32.

The interconnecting means associated with each segmented guide thimble 44 comprise opposite end portions 62, 64 of each guide thimble segment 36 including interlocking formations 68, 70 formed thereon, and an elongated tubular locking member 66 adapted to be inserted into the segmented guide thimble 44 for positively maintaining the interlocking formations 68, 70 on the end portions 62, 64 of the interconnected guide thimble segments 36 in interlocking engagement with each other. In Figs. 7-9, the interlocking formations on each guide thimble segment 36 are shown as circumferential bulges 68, 70 each defining an annular groove 72 or 74, respeotively, on the inside thereof, one bulge 68 being disposed on the first end portion 62 of the thimble segment 36 which has at least one and preferably several longitudinal slots 76 formed therein in order to render it resiliently compressible and expandable, and the other bulge 70 being disposed on the opposite second end portion 64 of the thimble segment 36 which preferably is radially enlarged just sufficiently to facilitate the insertion therein of the slotted end portion 62 of the adjacent guide thimble segment 36, and engagement of the bulge 68 thereon with the annular groove 74 defined on the inside of the bulge 70 on the second end portion 64 of the first-mentioned guide thimble segment 36. With all the guide thimble segments 36 of the stacked axial modules or subassemblies 34 thus fit and joined together to form the various segmented guide thimbles 44, the elongated tubular locking members 66 are inserted each into one of the segmented guide thimbles 44 in order to lock the engaged interlocking formations 68, 74 at the releasably interlocked joints 62, 64, 68, 70 thereon against accidental release. It will be appreciated that one of the segmented guide thimbles 44, located at the center of the axially modular fuel assembly 32, may be utilized to accommodate an instrumentation tube, such as the tube 20 shown in Fig. 1.

The axially modular fuel assembly 32 utilizing fuel rod segments 38 such as shown in Fig. 6 can be assembled by (a) stacking the required set of fuel modules or subassemblies 34A-C upon one another so that the corresponding guide thimble segments 36 and fuel rod segments 38 of the various subassemblies are axially aligned end-to-end; (b) interfitting the axially aligned fuel rod segments 38 of the stacked subassemblies 34 by causing the projections on their lower end plugs to nest in the recesses 58 of the adjacent upper end plugs 50 thereof; and (c) releasably interconnecting the axially aligned guide thimble segments 36 by causing the interlocking formations 68, 74 on their end portions 62, 64 to mate, and then inserting one of the elongated tubular locking members 66 into each segmented guide thimble 44 thus formed.

After completion of an operating cycle in the reactor core, the fuel assembly 32 can be disassembled and, subsequently, can be reassembled with fresh subassemblies substituted for depleted ones of the original set. This is done preferably by removing the fuel assembly 32 from the core, preparing it for disassembly by withdrawing the tubular locking members 66 from the segmented guide thimbles 44, and releasing the interconnected guide thimble segments 36 for separation from one another, whereupon the subassemblies or modules can be unstacked one at a time. After substituting fresh subassemblies or modules for the depleted ones, the fresh modules together with any retained upper and/or lower end modules reclaimed from the original set can be reassembled and reinstalled in the reactor core by reversing the disassembling procedure described above.

Fig. 12 is a schematic representation of a nuclear reactor core 78 composed of axially modular fuel assemblies 32 embodying the invention. As depicted therein, the reactor core 78 has an upper end region 78A and a lower end region 78B in both of which the average rate of axial fuel burnup is lower than in the larger intermediate core region 78C located therebetween. In the axially modular fuel assemblies 32 of the core 78, the upper and lower subassemblies or modules 34A, 34B, together with the fuel rod segments contained therein, have substantially the same axial dimensions as the upper and lower end regions 78A and 78B, respectively, of the core 78 so that the nuclear fuel therein will burn at the lower rate compared with that occurring in the intermediate core region 78C. The invention allows this lowly, hence incompletely, burned fuel in the end regions 78A-B of the reactor core to be reclaimed by separating the upper and lower subassemblies 34A, 34B from each axially modular fuel assembly 32 after completion thereof of a fuel cycle in the core, and allows the reclaimed upper and lower subassemblies to be subsequently re-used in a reconstituted or reassembled axially modular fuel assembly 32.

It will be appreciated that better fuel utilization will result from reclaiming and re-using the upper and lower end modules or subassemblies 34A, 34B containing the higher-reactivity fuel at the end of a fuel cycle.

**Claims**

1. A nuclear fuel assembly (32) for use in a nuclear reactor core (78), especially one having an upper end region (78A) and a lower end region (78B) in each of which the average rate of axial fuel burnup during reactor operation is lower than in an intermediate core region (78C) located therebetween, characterized in that said fuel assembly (32) comprises a plurality of axial fuel modules (34) which have releasable interconnecting means (58, 60; 62, 64, 66) for interfitting and releasably interlocking the fuel modules (34) in stacked axially aligned end-to-end relationship with respect to each other, said axial fuel modules (34) including upper and lower end modules (34A, 34B) which have axial dimensions corresponding substantially to those of said upper and lower end regions (78A, 78B), respectively, of the nuclear core (78).

2. A nuclear fuel assembly according to claim 1, characterized in that said fuel modules comprise fuel rod segments (38) which have end plugs (50, 52) including interfitting elements (58, 60) for releasably interfitting axially aligned fuel rod segments end-to-end.

3. A nuclear fuel assembly according to claim 2, characterized in that the interfitting elements for releasably interfitting any two adjacent ones of said fuel rod segments (38) comprise an axial recess (58) formed in one end plug (50) of one of the two adjacent fuel rod segments, and a complementarily shaped axial projection (60) formed on the adjoining end plug (52) of the other of said two adjacent fuel rod segments.

4. A nuclear fuel assembly according to claim 2, characterized in that the interfitting elements for releasably interfitting any two adjacent ones of said fuel rod segments (38A) comprise an internally threaded axial bore (58A) formed in one end plug (50A) of one of the two adjacent fuel rod segments, and an externally threaded axial stud (60A) on the adjoining end plug (52A) of the other of said two adjacent fuel rod segments.

5. A nuclear fuel assembly according to claim 1, 2, 3 or 4, characterized in that each of said axial fuel modules (34) comprises a subassembly comprising a plurality of elongate structural components (36) disposed in substantially parallel spaced relationship with respect to each other, and at least one transverse fuel-rod support grid (16) connected to said elongate structural components (36) so as to form a skeletal structure together therewith, said releasable interconnecting means (58, 60; 62, 64, 66) including end portions (62, 64) of the elongate structural components (36) which interfit and have disposed thereon mateable interlocking formations (68, 74) for releasably interlocking the interfit end portions of adjacent structural components (36) with each other.

6. A nuclear fuel assembly according to claim 5 including an upper end structure (22) and a lower end structure (12), characterized in that said upper end module (34A) and said lower end module (34B) have releasably connected thereto said upper end structure (22) and said lower end structure (12), respectively.

7. A nuclear fuel assembly according to claim 5 or 6, characterized in that said elongate structural components (36) are tubular guide thimble segments, and the interfit guide thimble segments (36) of the axially stacked fuel modules (34) form elongated segmented guide thimbles (44) extending full-length through the stacked fuel modules (34).

8. A nuclear fuel assembly according to claim 7, characterized in that the interlocking formations on each guide thimble segment (36) comprise a radial protuberance (68) defined on the outer periphery of one end portion (62) of the guide thimble segment, and an annular groove (74) defined on the inner periphery of an opposite end portion (64) thereof.

9. A nuclear fuel assembly according to claim 8, characterized in that said one end portion (62) is resiliently compressible and expandable.

10. A nuclear fuel assembly according to claim 8 or 9, characterized in that said opposite end portion (64) of each guide thimble segment (36) is enlarged just sufficiently to facilitate insertion therein of said one end portion (62) of the guide thimble segment (36) adjacent thereto.

11. A nuclear fuel assembly according to claim 7, 8, 9 or 10, characterized in that the releasable interconnecting means (58, 60; 62, 64, 66) associated with each elongated segmented guide thimble (44) include an elongated tubular locking member (66) removably inserted into the segmented guide thimble (44) for positively preventing accidental release of the mated interlocking formations (68, 74) disposed thereon.

12. A method of optimizing nuclear fuel utilization, characterized by the steps of (a) assembling an initial set of axial fuel modules (34) in stacked relationship with respect to each other such that corresponding fuel rod segments (38) therein are aligned endto-end; (b) releasably interfitting the aligned fuel rod segments (38) of adjacent fuel modules (34) to form a plurality of elongated segmented fuel rods (46) extending full-length through the stack of assembled fuel modules; and (c) releasably interconnecting the stacked fuel modules (34) so as to structurally integrate them as an axially modular fuel assembly (32).

13. A method according to claim 12, characterized by the following additional steps performed after use of said axially modular fuel assembly (32) in a nuclear reactor core: (d) releasing the interconnected axial fuel modules (34) and the interfit fuel rod segments (38) therein for separation from one another; (e) unstacking the released fuel modules (34); (f) substituting fresh axial fuel modules (34) for some of the fuel modules of the initial set; and (g) reassembling and releasably reconnecting the fresh fuel modules (34) together with the retained fuel modules (34) from the initial set in said stacked relationship.

14. A method according to claim 13, characterized in that said retained fuel modules (34) are upper and lower end modules (34A, 34B) from the initial set.

FIG. 1
(PRIOR ART)

FIG. 2

FIG. 3

FIG. 4

FIG. 5

EP 0 425 856 A1

FIG. 6

FIG. 7

FIG. 9

FIG. 8

10

FIG. 10

50A
38A
48A

52A
60A

58A
50A

38A
48A

52A
60A

58A
50A

38A
48A

52A
60A

58A
50A

38A

48A

52A
60A

58A

50A

38A

48A

52A

FIG. 11

38A
58A
50A

56A

54A

54A

48A

54A

52A

60A

FIG. 12

32
78

78A
34A

78C

34B

78B
34B
32

# EUROPEAN SEARCH REPORT

## EP 90 11 9468

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 582 138 (WESTINGHOUSE)<br>* Abstract<br>* & US-A-4 716 015 (Cat. D)<br>– – – | 1 | G<br>21 C 3/326 |
| A | US-A-3 151 035 (WYATT. UKAEA)<br>* Column 1, lines 41-46; column 2, lines 20-29 *<br>– – – | 1-4 | |
| A | GB-A-9 031 42 (LICENTIA)<br>* Page 2, lines 116-119; figure 3C *<br>– – – | 1 | |
| A | EP-A-0 221 641 (WESTINGHOUSE)<br>* Abstract; figure 2 *<br>– – – – – | 5-6,8-9 | |

| | | | TECHNICAL FIELDS SEARCHED (Int. Cl.5) |
|---|---|---|---|
| | | | G 21 C |

The present search report has been drawn up for all claims

| Place of search | Date of completion of search | Examiner |
|---|---|---|
| The Hague | 23 January 91 | DEROUBAIX P.G.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

& : member of the same patent family, corresponding document